# FASCICULE DE BREVET EUROPEEN

(11) **EP 3 601 768 B1**
(45) Date de publication et mention de la délivrance du brevet: **17.08.2022**
(21) Numéro de dépôt: 18712971.3
(22) Date de dépôt: 07.03.2018
(51) Int. Cl.: F02C 7/06

(54) **DEGAZEUR CENTRIFUGE DE TURBOMACHINE**
ZENTRIFUGALENTLÜFTER FÜR EINE TURBOMASCHINE
CENTRIFUGAL DEAERATOR FOR A TURBOMACHINE

(30) Priorité: 21.03.2017 FR 1752305
(43) Date de publication de la demande: 05.02.2020
(73) Titulaire: Safran Helicopter Engines, 64510 Bordes (FR)
(72) Inventeur: FULLERINGER, Benjamin, 77550 Moissy-Cramayel (FR); PAJARD, Jean-Pierre, 77550 Moissy-Cramayel (FR); CAZAUX, Yannick, 77550 Moissy-Cramayel (FR)
(74) Mandataire: Gevers & Orès
(86) Numéro de dépôt international: PCT/FR2018/050528
(87) Numéro de publication internationale: WO 2018/172646

(56) Documents cités:
- FR-A1- 3 007 463
- US-A- 5 716 423
- US-A1- 2015 007 531
- US-A1- 2016 208 650

## Description

### 1. Domaine technique de l'invention

L'invention concerne un dégazeur centrifuge de turbomachine.

### 2. Arrière-plan technologique

L'état de l'art comprend notamment les demandes de brevet publiées sous les numéros US-A1-2015/007531, FR-A1-3 007 463 et US-A1-2016/208650, ainsi que le brevet US-A-5 716 423.

Les turbomachines sont des systèmes complexes qui mettent en œuvre un certain nombre d'ensembles tournants (turbines, compresseur, etc.) qui doivent être équipés de dispositifs d'étanchéité. Ces dispositifs d'étanchéité sont en général réalisés par des labyrinthes d'air pressurisés aménagés au voisinage des ensembles tournants. Pour ce faire, un air est prélevé directement dans la veine d'air de la turbomachine. Cet air transite ensuite dans la turbomachine par les différents labyrinthes prévus à cet effet, puis est évacué vers l'extérieur de la turbomachine pour limiter la montée en pression des autres zones de la turbomachine, notamment le réducteur, la boite accessoire, etc. Or, cet air ayant transité par différentes zones de la turbomachine, il est chargé en huile utilisé pour le refroidissement et la lubrification des paliers et des pignons des ensembles tournants. Pour éviter le rejet d'air chargé d'huile, atténuer l'impact écologique des turbomachines, réduire la consommation d'huile et limiter les opérations de remplissage des réserves d'huile, il est important de prévoir des dégazeurs qui permettent de séparer l'huile de l'air avant d'évacuer l'air vers l'extérieur de la turbomachine.

Un tel dégazeur est en général agencé et entrainé par une prise de puissance mécanique au niveau de la boite accessoire ou du réducteur de la turbomachine.

De manière connue, un tel dégazeur centrifuge comprend une ou plusieurs enceinte(s) de séparation centrifuge du mélange air/huile agencée autour d'un arbre creux et délimitée par une paroi annulaire externe et une paroi annulaire interne. Le dégazeur comprend en outre une entrée axiale d'alimentation de l'enceinte avec le mélange air/huile, et une sortie d'huile périphérique ménagée dans la paroi externe. Ainsi, lors de la mise en rotation du dégazeur, obtenue en général par l'intermédiaire d'un pignon de la boite accessoire ou du réducteur, l'huile est naturellement entrainée par force centrifuge vers la sortie d'huile ménagée en périphérie du dégazeur. Une sortie d'air déshuilé est en outre ménagée dans la paroi interne et reliée à l'arbre creux, ce qui permet d'évacuer l'air vers l'extérieur.

Certains dégazeurs comprennent en outre des filtres agencés dans l'enceinte du dégazeur pour améliorer le captage des gouttes d'huile et favoriser ainsi le déshuilage du mélange. En effet, les filtres augmentent la surface de contact disponible et améliorent donc la probabilité qu'une goutte d'huile transportée par le flux de mélange soit accrochée à une paroi. Ces filtres sont en général formés d'une mousse métallique.

L'un des inconvénients néanmoins de ces dégazeurs à mousse métallique réside dans le fait qu'à haute vitesse (par exemple pour des vitesses de l'ordre de 6000 tours/min) et plus encore à très haute vitesse (par exemple pour des vitesses de l'ordre de 25 000 tours/min), la surface frontale constituée par la mousse métallique agit comme un mur et le degré de pénétration des particules d'air dans la mousse est faible. Cela se traduit par des pertes de charges importantes à haute vitesse que le système d'air secondaire de la turbomachine peut ne pas supporter avec le risque associé de fuite par les étanchéités du générateur. Afin de compenser les pertes de charges, le débit du système d'air secondaire peut-être augmenté afin de garantir les étanchéités, avec toutefois un prélèvement dans la veine augmenté et donc un impact sur les performances du générateur.

Les inventeurs ont donc cherché à améliorer les performances des dégazeurs connus, en particulier la réduction des pertes de charges du dégazeur, en particulier à haute vitesse. Ainsi, les besoins en débit du système d'air secondaire sont diminués, avec comme conséquence une amélioration de la performance moteur et une diminution du débit d'air à traiter. Ainsi la consommation en huile pourra être réduite. La consommation des turbomachines reste un axe de progrès majeur. Cela doit permettre d'optimiser la quantité d'huile embarquée et donc de réduire la masse de la turbomachine. Cela doit également permettre d'augmenter la durée des missions. Cela doit également réduire les opérations de maintenance sur les turbomoteurs. Enfin, cela doit permettre d'améliorer l'impact écologique des turbomoteurs.

### 3. Objectifs de l'invention

L'invention vise à fournir un dégazeur qui pallie au moins certains des inconvénients des dégazeurs connus.

L'invention vise en particulier à fournir, dans au moins un mode de réalisation, un dégazeur centrifuge de turbomachine qui présente des performances améliorées par rapport aux dégazeurs connus.

L'invention vise également à fournir, dans au moins un mode de réalisation, un dégazeur qui conserve des bonnes performances (faibles pertes de charges et faible consommation en huile) à haute ou très haute vitesse.

### 4. Exposé de l'invention

Pour ce faire, l'invention concerne un dégazeur centrifuge d'un mélange air/huile de turbomachine comprenant :
- une enceinte annulaire de séparation centrifuge dudit mélange agencée autour d'un arbre creux s'étendant le long d'une direction, dite direction axiale, et délimitée par une paroi annulaire externe et une paroi annulaire interne,
- au moins une entrée axiale dudit mélange air/huile dans ladite enceinte,
- un pignon de mise en rotation de ladite enceinte comprenant un voile relié solidairement auxdites parois annulaires interne et externe de sorte qu'une rotation dudit pignon entraine ladite enceinte en rotation,
- au moins une sortie radiale d'huile ménagée dans ladite paroi externe et configurée pour pouvoir évacuer l'huile séparée dudit mélange vers l'extérieur du dégazeur,
- au moins une sortie d'air déshuilé ménagée dans ladite paroi interne et configurée pour pouvoir évacuer l'air déshuilé vers ledit arbre creux.

Un dégazeur selon l'invention est caractérisé en ce qu'il comprend une mousse métallique logée dans ladite enceinte en s'étendant partiellement le long de ladite direction axiale de manière à délimiter deux espaces successifs le long de la direction axiale, un espace libre de mousse et un espace garni de mousse, ledit espace libre de mousse ouvrant sur ladite (lesdites) entrée(s) axiale(s).

Un dégazeur équipé d'une mousse métallique, telle qu'une mousse commercialisée sous la dénomination Retimet^{®}, permet de former une surface de contact potentiel importante avec le mélange air/huile ce qui permet d'améliorer la probabilité de capter une particule d'huile qui est ensuite centrifugée hors du dégazeur. Ces mousses font office de filtre. En outre, l'effet centrifuge permet d'éviter la saturation des filtres par l'évacuation continue des gouttes d'huiles accrochées aux filtres.

Selon l'invention, la mousse métallique s'étend le long de la direction axiale uniquement partiellement dans ladite enceinte de manière à délimiter deux espaces distincts et jointifs, un espace libre de mousse et un espace garni de mousse. L'espace libre de mousse s'étend entre les entrées axiales et l'espace garni de mousse. L'espace libre de mousse favorise l'aspiration du mélange air/huile à séparer et contribue à la séparation des gouttes de fort diamètre, tandis que l'espace garni de mousse favorise le captage des particules d'huile restantes à évacuer par l'enceinte centrifuge. En d'autres termes et selon l'invention, la mousse métallique ne comble pas intégralement l'enceinte du dégazeur, mais uniquement une partie de l'enceinte. Une première partie au voisinage des entrées axiales de mélange est laissée libre de mousse et une deuxième partie au voisinage du fond de l'enceinte, c'est-à-dire agencée axialement à l'opposée des entrées, est remplie de mousse métallique.

Cette architecture particulière du dégazeur permet que le mélange air/huile entre dans le dégazeur par les entrées axiales et circule axialement dans l'espace libre de mousse sans pertes de charges notables. Dans ce premier espace, une première phase de déshuilage est effectuée par le déplacement des gouttes d'huile de grand diamètre vers la périphérie de l'enceinte sous l'effet de la force centrifuge. Le deuxième espace de l'enceinte est garni de mousses métalliques qui sont attaquées axialement par l'air et les gouttes d'huile restantes (i.e. de plus petit diamètre), limitant ainsi les pertes de charges. Les gouttes d'huile captées par les mousses sont ensuite centrifugées vers la périphérie de l'enceinte.

Avantageusement et selon l'invention, ladite mousse métallique présente une épaisseur variable - par exemple décroissante - entre la paroi interne et la paroi externe de l'enceinte de manière à uniformiser les pertes de charge entre les zones proches de la paroi interne peu soumises à la force centrifuge et les zones proches de la paroi externe fortement soumises à la force centrifuge.

Compte tenu de l'architecture d'un dégazeur selon l'invention, le chemin le plus court pour l'air entre l'entrée et la sortie d'air déshuilé est celui passant à la base des mousses, c'est-à-dire au voisinage de l'arbre creux. L'air a donc tendance à passer par cette partie basse, qui est en outre, moins soumise à la force centrifuge que les parties proches de la périphérie de l'enceinte. Pour limiter ce phénomène, cette variante prévoit une modification de la géométrie de la mousse entre la partie basse de la mousse (c'est-à-dire celle au voisinage de la paroi interne) et la partie haute de la mousse (c'est-à-dire celle au voisinage de la paroi externe), ce qui permet de mieux répartir le passage d'air et d'uniformiser les pertes de charges. Le flux est alors mieux réparti et les vitesses du mélange sont plus homogènes. L'huile qui remonte dans les mousses métalliques a également tendance à former des gouttes de plus en plus grosses, ce qui augmente la concentration d'huile dans les mousses au voisinage de la périphérie de l'enceinte. La forme du filtre permet également de faciliter le drainage de l'huile contenu dans le filtre.

Avantageusement et selon l'invention, chaque sortie d'air déshuilé est exempte de mousse métallique.

Cette variante permet d'éviter un effet « goulet » au voisinage des sorties d'air déshuilé et donc d'éviter une augmentation des vitesses dans la mousse métallique au voisinage des sorties d'air déshuilé, qui se traduiraient sinon par une augmentation des pertes de charges.

Avantageusement et selon l'invention, ladite enceinte est formée d'une pluralité de compartiments agencés radialement autour de l'arbre creux, chaque compartiment étant alimenté en mélange par une entrée axiale de mélange, étant relié à une ou plusieurs sortie(s) radiale(s) d'huile et à une sortie d'air déshuilé, chaque compartiment comprenant deux espaces successifs le long de la direction axiale, un espace libre de mousse et un espace garni de mousse, ledit espace libre de mousse ouvrant sur ladite entrée axiale.

Selon cette variante, l'enceinte du dégazeur est divisée en une pluralité de compartiments, chaque compartiment étant relié à une entrée axiale du mélange pour pouvoir être alimenté en mélange, une ou plusieurs sortie(s) radiale(s) d'huile pour pouvoir évacuer l'huile en dehors du dégazeur, et une ou plusieurs sortie(s) d'air déshuilé pour pouvoir évacuer l'air déshuilé vers l'arbre creux. Ces compartiments sont uniformément répartis autour de l'arbre creux. Cela permet d'améliorer le déshuilage du mélange en formant une pluralité de sous-enceinte centrifuge de séparation du mélange. En outre chaque compartiment présente les deux espaces successifs de l'enceinte, à savoir un espace libre de mousse pour favoriser l'aspiration du mélange air/huile à séparer et un espace garni de mousse pour favoriser le captage des gouttes d'huile.

Malgré ces précautions, l'utilisation d'un filtre, typiquement de type mousse métallique, tend à augmenter les pertes de charges du dégazeur.

Lorsque les vitesses de rotation sont importantes, le mélange acquiert dans les alvéoles de la mousse un moment cinétique important. En s'orientant vers la sortie, l'air déshuilé s'oriente de manière centripète et voit sa vitesse angulaire augmenter pour conserver ce moment cinétique. Il en résulte des vitesses angulaires, et donc des vitesses d'écoulement très importantes dans l'arbre creux du dégazeur. Ceci affecte de manière importante les pertes de charge notamment sur les applications à forte vitesse.

Avantageusement, pour compenser les pertes de charge liées à l'utilisation de filtres ou pour réduire les pertes de charge d'un dégazeur centrifuge simple, un inhibiteur de vortex est logé dans l'arbre creux. Cet inhibiteur pourra être rapporté par collage, vissage ou frettage notamment et constitue une pièce simple et facilement intégrable dans l'arbre creux. Cette variante permet ainsi de réduire les pertes de charge d'un dégazeur centrifuge avec ou sans Retimet^{®}, et donc d'en améliorer les performances. L'inhibiteur de vortex peut comprendre des ailettes de redressement du flux.

Avantageusement et selon l'invention, ladite (lesdites) entrée(s) axiale(s) de mélange et ladite (lesdites) sortie(s) radiale(s) d'huile sont agencées axialement de part et d'autre dudit voile dudit pignon de sorte à empêcher toute réintroduction d'huile évacuée par ladite (lesdites) sortie(s) radiale(s) d'huile dans l'enceinte par ladite (lesdites) entrée(s) axiale(s) de mélange.

Un dégazeur selon cette variante de l'invention permet de ségréguer les flux d'entrée de mélange air/huile des flux d'évacuation d'huile en agençant astucieusement les entrées de mélange et les sorties d'huile par rapport au voile du pignon de mise en rotation du dégazeur. Cet agencement prévoit que les entrées de mélange et les sorties d'huile sont axialement agencées de part et d'autre du voile du pignon. Cela permet donc de limiter au maximum la réintroduction d'huile évacuée par les sorties radiales d'huile directement dans le mélange présent en entrée du dégazeur. En d'autres termes, le voile du pignon fait office de mur de séparation entre le mélange en entrée de dégazeur et l'huile évacuée par les sorties radiales d'huile. En outre, en fonctionnement, le pignon étant en rotation, les dents du pignon génèrent par brassage d'air, un mur d'air qui entoure le pignon et qui contribue donc également à limiter le passage de l'huile évacuée par les sorties radiales vers les entrées axiales de mélange agencées de l'autre côté du pignon. Le pignon peut être agencé axialement en tout point entre les entrées de mélange et les sorties d'huile. En particulier, il peut être agencé à proximité des entrées de mélange ou à proximité des sorties d'huile, de manière centrée ou non.

Cet agencement spécifique des entrées de mélange et des sorties d'huile permet de limiter le phénomène de réintroduction d'huile dans le mélange, ce qui améliore les performances de déshuilage du mélange air/huile. Cette amélioration des performances permet d'optimiser la quantité d'huile embarquée dans les turbomachines et donc de réduire la masse de la turbomachine. Cela permet par conséquent d'améliorer l'impact écologique d'un turbomoteur équipé d'un dégazeur selon l'invention.

Avantageusement, un dégazeur selon l'invention comprend en outre au moins un disque anti-retour s'étendant perpendiculairement à la paroi externe et obstruant en partie ladite (lesdites) entrée(s) axiale(s) de mélange dans l'enceinte de manière à empêcher une sortie d'huile au voisinage de ladite paroi externe par ladite (lesdites) entrée(s) axiale(s) de mélange.

Selon cette variante, l'enceinte comprend un disque anti-retour qui fait office de mur empêchant la sortie d'huile par l'entrée du mélange. En particulier, en fonctionnement, l'enceinte est mise en rotation par l'intermédiaire du pignon. L'huile est alors entraînée par l'accélération centrifuge vers la paroi externe de l'enceinte. Au voisinage de la paroi externe, avant l'évacuation de l'huile par les sorties radiales, l'huile forme un film d'huile qui s'étend sur l'intérieur de la paroi externe. Pour éviter que ce film ne glisse sur l'intérieur de la paroi externe et ne ressorte par les entrées axiales de mélange, l'invention selon cette variante prévoit un disque qui obstrue au niveau de la paroi externe le passage d'huile. Cela permet donc d'éviter que le mélange en entrée de l'enceinte ne soit enrichit par l'huile extraite du mélange en cours de traitement par le dégazeur.

Avantageusement et selon cette variante, le disque anti-retour est formé par une portion du voile du pignon agencée en amont de ladite enceinte et entourant les entrées axiales de mélange.

Selon cette variante, le voile du pignon est agencé en amont de ladite enceinte. En outre, il est mis à contribution pour former le disque anti-retour.

Avantageusement et selon cette variante, ledit voile dudit pignon comprend des ouvertures d'accès à ladite (auxdites) entrée(s) axiale(s) du mélange dans l'enceinte.

Le pignon étant agencé en amont de l'enceinte, le voile comprend avantageusement des ouvertures permettant au mélange d'accéder à l'enceinte.

L'invention concerne également un turbomoteur comprenant un organe mécanique du type boite accessoires ou réducteur, caractérisé en ce qu'il comprend un dégazeur selon l'invention adapté pour être entraîné en rotation par ledit organe mécanique.

Un turbomoteur selon l'invention équipé d'un dégazeur selon l'invention consomme donc moins d'huile qu'un turbomoteur de l'art antérieur par une récupération d'huile améliorée. Un turbomoteur selon l'invention présente un poids plus léger qu'un turbomoteur de l'art antérieur. La durée d'une mission d'un hélicoptère équipé de turbomoteurs selon l'invention est donc plus longue. En outre, les opérations de maintenance sont moins fréquentes. Enfin, l'impact écologique d'un turbomoteur selon l'invention est meilleur que celui des turbomoteurs de l'art antérieur.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en perspective et coupée selon un plan de symétrie d'un dégazeur selon un mode de réalisation de l'invention,
- la figure 2 est une vue schématique partielle en perspective et coupée selon un plan de symétrie du dégazeur de la figure 1 mettant en évidence le principe de fonctionnement de ce dégazeur, et
- la figure 3 est une vue schématique en perspective et coupée selon un plan de symétrie d'un dégazeur selon une variante de réalisation de l'invention.

### 6. Description détaillée d'un mode de réalisation de l'invention

Sur les figures, les échelles et les proportions ne sont pas strictement respectées et ce, à des fins d'illustration et de clarté.

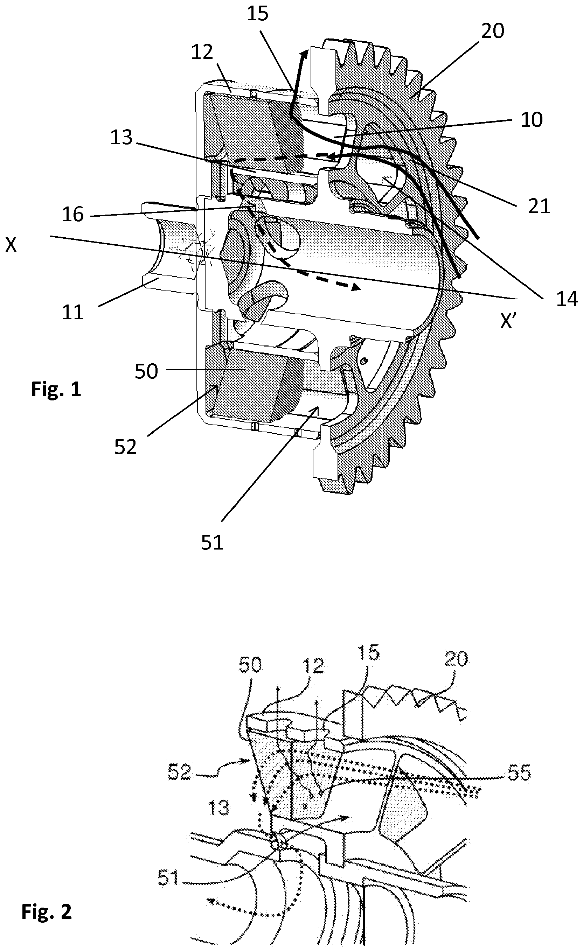

Un dégazeur selon l'invention comprend tel que représenté sur la figure 1 une enceinte 10 annulaire de séparation centrifuge d'un mélange air/huile agencée autour d'un arbre 11 creux. Cette enceinte 10 annulaire est délimitée par une paroi annulaire externe 12 et une paroi annulaire interne 13. Cette enceinte 10 comprend une pluralité de compartiments de dégazage répartis autour de l'arbre 11 creux.

Le dégazeur comprend en outre une pluralité d'entrées axiales 14 permettant au mélange air/huile de pénétrer dans l'enceinte 10. Chaque compartiment de l'enceinte 10 est relié à une entrée axiale 14 de telle sorte que chaque compartiment puisse recevoir un mélange à séparer par une entrée dédiée.

Le dégazeur comprend en outre une pluralité de sorties radiales 15 d'huile ménagée dans la paroi externe 12 et configurée pour pouvoir évacuer l'huile séparée du mélange par l'effet de la force centrifuge du dégazeur. Chaque compartiment de l'enceinte 10 est relié à une ou plusieurs sortie(s) radiale(s) 15 d'huile.

Le dégazeur comprend en outre une pluralité de sorties d'air déshuilé ménagée dans la paroi interne 13 et configurée pour pouvoir évacuer l'air déshuilé vers l'arbre 11 creux. Chaque compartiment de l'enceinte 10 est relié à au moins une sortie d'air 16 déshuilé.

Enfin, le dégazeur comprend un pignon 20 de mise en rotation de l'enceinte 10 comprenant un voile 21 relié solidairement à l'arbre 11 creux et aux parois annulaires interne 13 et externe 12.

Un dégazeur selon l'invention comprend en outre des mousses 50 métalliques agencées dans chaque compartiment de l'enceinte 10. Ces mousses sont par exemple des mousses commercialisées sous la marque Retimet^{®}. Elles permettent d'améliorer l'efficacité du dégazeur en augmentant la probabilité de capter des particules d'huile.

Selon l'invention, les mousses 50 métalliques ne s'étendent pas intégralement dans les compartiments, mais s'étendent uniquement sur une portion axiale de chaque compartiment de manière à former deux espaces distincts successifs dans le compartiment : un espace libre 51 de mousse et un espace garni 52 de mousse. L'espace libre 51 de mousse est alimenté en mélange par les entrées 14 axiales et il débouche dans l'espace garni 52 de mousse. L'espace garni 52 de mousse débouche dans les sorties d'huile périphériques. L'espace libre 51 de mousse présente ainsi une fonction centrifuge simple du dégazeur permettant au mélange huile/air de pénétrer dans l'enceinte 10 du dégazeur, puis de se déplacer axialement dans un repère tournant. Au cours de ce déplacement, une première phase de déshuilage est réalisée. L'espace garni 52 de mousse présente une fonction de captage des gouttes d'huile non extraites au cours de la première phase. Cette deuxième phase de déshuilage est en outre réalisée dans l'espace garni 52 de mousse sans pertes de charges notables du fait de l'attaque axiale des gouttes d'huile. De plus, la séparation de l'enceinte entre un espace libre de mousse et un espace garni de mousse permet d'éviter la saturation des mousses métalliques de l'espace garni de mousse par une première phase de déshuilage dans l'espace libre de mousse. Les inventeurs ont réalisé que cette architecture permet de fournir des résultats qui allient les faibles pertes de charge des dégazeurs totalement libres de mousse et la bonne séparation des dégazeurs totalement garnis de mousse. En d'autres termes, les deux espaces coopèrent pour fournir un résultat qui va au-delà de la somme des résultats de chacun des deux espaces pris individuellement.

Selon un mode de réalisation avantageux représenté sur la figure 2, les mousses métalliques présentent dans chaque compartiment une épaisseur variable entre la paroi interne 13 et la paroi externe 12, ce qui permet d'uniformiser les pertes de charges entre les zones proches de la paroi interne 13 peu soumises à la force centrifuge et les zones proches de la paroi externe 12 fortement soumises à la force centrifuge.

La figure 2 illustre également de manière schématique le déplacement de gouttes d'huile 55 dans une mousse métallique. Les gouttes d'huile 55 sont captées par la mousse 50 et se déplacent vers la périphérie du dégazeur du fait de la force centrifuge résultant de la mise en rotation de l'enceinte par l'intermédiaire du pignon 20. En revanche, l'air déshuilé est naturellement évacué vers l'arbre creux 11 du dégazeur.

Le dégazeur selon le mode de réalisation des figures comprend en outre des entrées axiales 14 de mélange et des sorties radiales 16 d'huile agencées axialement de part et d'autre du voile 21 du pignon 20.

Cet agencement particulier des entrées 14 et des sorties 16 par rapport au voile 21 du pignon 20 permet d'empêcher toute réintroduction dans l'enceinte d'huile évacuée par les sorties radiales. En particulier, l'huile évacuée par les sorties 15, formées par des orifices dans la paroi 12 externe, ne peut pas se diriger vers les entrées 14 parce que le pignon 20 fait office de mur de séparation. En outre, la rotation du pignon génère un mur d'air qui empêche la circulation d'huile vers les entrées 14. En effet, les dents du pignon 20 brassent l'air au cours de la rotation du pignon, ce qui a pour effet de former un mur d'air qui empêche le passage d'huile vers les entrées axiales 14.

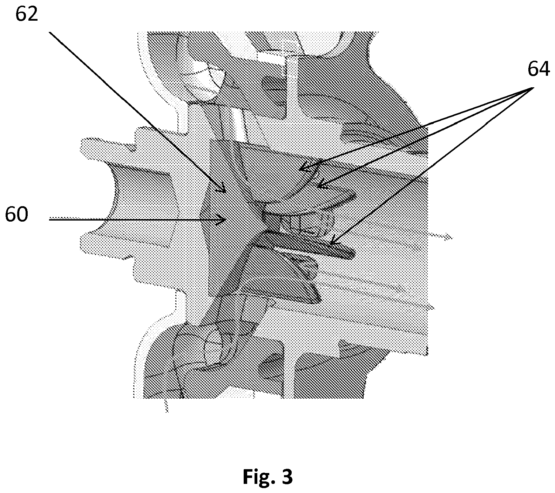

La figure 3 illustre de manière schématique le flux d'air ré-orienté par un inhibiteur de vortex 60 logé dans l'arbre creux 11, afin d'éviter une mise en rotation du flux d'air ou vortex qui générerait des pertes de charge importantes notamment sur les applications tournant à haute vitesse. Cet inhibiteur 60 comprend par exemple un corps 62 de forme générale conique dont la pointe est orientée vers l'aval et centrée sur l'axe XX' du dégazeur. Des ailettes 64 s'étendent radialement vers l'extérieur depuis ce cône et forcent le flux d'air pénétrant dans l'arbre creux à s'écouler sensiblement parallèlement à l'axe XX'. Les ailettes sont régulièrement réparties autour de l'axe XX' et s'étendent chacune dans un plan sensiblement radial passant par l'axe XX'.

En outre, selon un mode de réalisation avantageux non représenté sur les figures, le dégazeur comprend un disque anti-retour qui s'étend perpendiculairement à la paroi externe et qui obstrue en partie les entrées axiales de manière à empêcher une sortie d'huile au voisinage de la paroi externe par les entrées axiales. Ainsi, l'huile au voisinage de la paroi externe ne peut ressortir de l'enceinte par les entrées parce qu'elle est bloquée par le disque qui s'étend au voisinage de la paroi externe. Ce disque est par exemple réalisé par une excroissance du voile du pignon au niveau des entrées.

L'invention ne se limite pas aux seuls modes de réalisation décrits en lien avec les figures. Par exemple, selon d'autres modes de réalisation non représentés, les mousses métalliques peuvent présenter d'autres géométries à l'intérieur des compartiments de l'enceinte sans remettre en cause le principe de l'invention qui est de prévoir des mousses métalliques à l'intérieur de l'enceinte qui s'étendent uniquement partiellement à l'intérieur de l'enceinte le long de la direction axiale.

## Revendications

1. Dégazeur centrifuge d'un mélange air/huile de turbomachine comprenant :
- une enceinte (10) annulaire de séparation centrifuge dudit mélange agencée autour d'un arbre (11) creux s'étendant le long d'une direction, dite direction axiale, et délimitée par une paroi annulaire externe (12) et une paroi annulaire interne (13),
- au moins une entrée axiale (14) dudit mélange air/huile dans ladite enceinte (10),
- un pignon (20) de mise en rotation de ladite enceinte (10) comprenant un voile (21) relié solidairement auxdites parois annulaires interne (13) et externe (12) de sorte qu'une rotation dudit pignon (20) entraine ladite enceinte (10) en rotation,
- au moins une sortie radiale (15) d'huile ménagée dans ladite paroi externe (12) et configurée pour pouvoir évacuer l'huile séparée dudit mélange vers l'extérieur du dégazeur,
- au moins une sortie d'air déshuilé ménagée dans ladite paroi interne (13) et configurée pour pouvoir évacuer l'air déshuilé vers ledit arbre (11) creux,
**caractérisé en ce qu'**il comprend une mousse (50) métallique logée dans ladite enceinte (10) en s'étendant partiellement le long de ladite direction axiale de manière à délimiter deux espaces successifs le long de la direction axiale (X'X), un espace libre (51) de mousse et un espace garni (52) de mousse, ledit espace libre de mousse ouvrant sur ladite(lesdites) entrée(s) axiale(s).

2. Dégazeur selon la revendication 1, **caractérisé en ce que** ladite mousse (50) métallique présente une épaisseur variable entre la paroi interne (13) et la paroi externe (12) de l'enceinte de manière à uniformiser les pertes de charges entre les zones proches de la paroi interne (13) peu soumises à la force centrifuge et les zones proches de la paroi externe (12) fortement soumises à la force centrifuge.

3. Dégazeur selon l'une des revendications 1 ou 2, **caractérisé en ce que** chaque sortie d'air déshuilé est exempte de mousse métallique.

4. Dégazeur selon l'une des revendications 1 à 3, **caractérisé en ce que** ladite enceinte (10) est formée d'une pluralité de compartiments agencés radialement autour de l'arbre (11) creux, chaque compartiment étant alimenté en mélange par une entrée axiale (14) de mélange, étant relié à une sortie radiale (15) d'huile et à une sortie d'air déshuilé, chaque compartiment comprenant deux espaces successifs le long de la direction axiale (X'X), un espace libre (51) de mousse et un espace garni (52) de mousse, ledit espace libre de mousse ouvrant sur ladite entrée axiale.

5. Dégazeur selon d'une des revendications 1 à 4, **caractérisé en ce qu'**un inhibiteur de vortex (60) est logé dans ledit arbre creux (11).

6. Dégazeur selon la revendication précédente, **caractérisé en ce que** l'inhibiteur de vortex (60) comprend des ailettes (64) de redressement du flux.

7. Turbomoteur comprenant un organe mécanique du type boite accessoires ou réducteur, **caractérisé en ce qu'**il comprend un dégazeur selon l'une des revendications 1 à 6 adapté pour être entraîné en rotation par ledit organe mécanique.

## Patentansprüche

1. Zentrifugalentgaser eines Luft-/Ölgemischs für eine Turbomaschine, umfassend:
- eine ringförmige Einschließung (10) zur zentrifugalen Trennung des Gemischs, die um eine Hohlwelle (11) angeordnet ist, die sich in einer Richtung, als axiale Richtung bezeichnet, erstreckt, und die von einer ringförmigen äußeren Wand (12) und einer ringförmigen inneren Wand (13) umgrenzt ist,
- mindestens einen axialen Einlass (14) für das Luft-/Ölgemisch in die Einschließung (10),
- ein Ritzel (20), um die Einschließung in Drehung (10) zu versetzen, umfassend einen Kranz (21), der derart fest mit der ringförmigen inneren (13) und äußeren (12) Wand verbunden ist, dass eine Drehung des Ritzels (20) die Einschließung (10) in Drehung versetzt,
- mindestens einen radialen Ölauslass (15), der in der äußeren Wand (12) eingerichtet ist und konfiguriert ist, um das getrennte Öl des Gemischs zur Außenseite des Entgasers ablassen zu können,
- mindestens einen Auslass für entölte Luft, der in der inneren Wand (13) eingerichtet ist und konfiguriert ist, um die entölte Luft zur Hohlwelle (11) ablassen zu können,
**dadurch gekennzeichnet, dass** er einen metallischen Schaum (50) umfasst, der in der Einschließung (10) aufgenommen ist, indem er sich teilweise in der axialen Richtung erstreckt, sodass zwei aufeinanderfolgende Räume in der axialen Richtung (X'X), ein schaumfreier Raum (51) und ein mit Schaum versehener Raum (52) abgegrenzt werden, wobei sich der schaumfreie Raum zu dem (den) axialen Einlass (Einlässen) hin öffnet.

2. Entgaser nach Anspruch 1, **dadurch gekennzeichnet, dass** der metallische Schaum (50) eine variable Dicke zwischen der inneren Wand (13) und der äußeren Wand (12) der Einschließung aufweist, sodass die Druckverluste zwischen den Bereichen nahe der inneren Wand (13), die der Zentrifugalkraft wenig ausgesetzt sind, und den Bereichen nahe der äußeren Wand (12), die der Zentrifugalkraft stark ausgesetzt sind, vereinheitlicht werden.

3. Entgaser nach einem der Ansprüche 1 oder 2, **dadurch gekennzeichnet, dass** jeder Auslass für entölte Luft frei von metallischem Schaum ist.

4. Entgaser nach einem der Ansprüche 1 bis 3, **dadurch gekennzeichnet, dass** die Einschließung (10) aus einer Vielzahl von Fächern gebildet ist, die radial um die Hohlwelle (11) eingerichtet sind, wobei jedes Fach durch einen axialen Gemischeinlass (14), der mit einem radialen Ölauslass (15) und mit einem Auslass für entölte Luft verbunden ist, mit dem Gemisch versorgt wird, wobei jedes Fach zwei aufeinanderfolgende Räume in der axialen Richtung (X'X), einen schaumfreien Raum (51) und einen mit Schaum versehenen Raum (52) umfasst, wobei sich der schaumfreie Raum zum axialen Einlass hin öffnet.

5. Entgaser nach einem der Ansprüche 1 bis 4, **dadurch gekennzeichnet, dass** ein Wirbelhemmer (60) in der Hohlwelle (11) aufgenommen ist.

6. Entgaser nach dem vorstehenden Anspruch, **dadurch gekennzeichnet, dass** der Wirbelhemmer (60) Rippen (64) zum Strömungsbegradigung umfasst.

7. Turbomotor, umfassend ein mechanisches Organ vom Typ eines Zubehörkastens oder Reduktors, **dadurch gekennzeichnet, dass** er einen Entgaser nach einem der Ansprüche 1 bis 6 umfasst, der dazu angepasst ist, durch das mechanische Organ in Drehung versetzt zu werden.

## Claims

1. Centrifugal deaerator for an air/oil mixture of a turbomachine comprising:
- an annular housing (10) for the centrifugal separation of said mixture arranged around a hollow shaft (11) extending along a direction, so-called axial direction, and delimited by an outer annular wall (12) and an inner annular wall (13),
- at least one axial inlet (14) of said air/oil mixture in said housing (10),
- a pinion (20) for rotating said housing (10) comprising a web (21) securely connected to said inner (13) and outer (12) annular walls such that a rotation of said pinion (20) drives said housing (10) in rotation,
- at least one radial oil outlet (15) arranged in said outer wall (12) and configured to be able to evacuate the oil separated from said mixture towards the outside of the deaerator,
- at least one de-oiled air outlet arranged in said inner wall (13) and configured to be able to evacuate the de-oiled air towards said hollow shaft (11), **characterised in that** it comprises a metal foam (50) housed in said housing (10) by extending partially along said axial direction so as to delimit two successive spaces along the axial direction (X'X), a foam-free space (51) and a foam-lined space (52), said foam-free space opening onto said axial inlet(s).

2. Deaerator according to claim 1, **characterised in that** said metal foam (50) presents a variable thickness between the inner wall (13) and the outer wall (12) of the housing so as to standardise the load losses between the zones close to the inner wall (13) little subjected to the centrifugal force and the zones close to the outer wall (12) highly subjected to the centrifugal force.

3. Deaerator according to one of claims 1 or 2, **characterised in that** each de-oiled air outlet is free of metal foam.

4. Deaerator according to one of claims 1 to 3, **characterised in that** said housing (10) is formed of a plurality of compartments arranged radially around the hollow shaft (11), each compartment being provided with mixture through an axial mixture inlet (14), being connected to a radial oil outlet (15) and to a de-oiled air outlet, each compartment comprising two successive spaces along the axial direction (X'X), a foam-free space (51) and a foam-lined space (52), said foam-free space opening onto said axial inlet.

5. Deaerator according to one of claims 1 to 4, **characterised in that** a vortex inhibitor (60) is housed in said hollow shaft (11).

6. Deaerator according to the preceding claim, **characterised in that** the vortex inhibitor (60) comprises flow recovery blades (64).

7. Turboshaft comprising a mechanical member of the accessory box or reduction gear type, **characterised in that** it comprises a deaerator according to one of claims 1 to 6, adapted to be driven in rotation by said mechanical member.
